# EUROPÄISCHE PATENTSCHRIFT

(11) **EP 3 007 017 B1**
(45) Veröffentlichungstag und Bekanntmachung des Hinweises auf die Patenterteilung: **28.03.2018**
(21) Anmeldenummer: 14188424.7
(22) Anmeldetag: 10.10.2014
(51) Int. Cl.: G05B 19/042

(54) **Produktions- oder Werkzeugmaschine sowie Verfahren zum Betrieb einer solchen Maschine**
Production or machine tool and method for operating such a machine
Machine de production ou machine-outil, ainsi que procédé destiné au fonctionnement d'une telle machine

(43) Veröffentlichungstag der Anmeldung: 13.04.2016
(73) Patentinhaber: Siemens Aktiengesellschaft, 80333 München (DE)
(72) Erfinder: Kuhnert, Wolfram, 09247 Röhrsdorf (DE)

(56) Entgegenhaltungen:
- US-A1- 2004 205 185
- US-A1- 2010 030 348
- US-A1- 2014 121 789

## Beschreibung

Die Erfindung betrifft eine im Folgenden mitunter auch nur kurz als Maschine bezeichnete programmgesteuerte Produktions-oder Werkzeugmaschine sowie ein Verfahren zum Betrieb einer solchen Maschine. Dabei ist unter einer Produktions- oder Werkzeugmaschine allgemein ein programmgesteuertes Automatisierungssystem und damit zum Beispiel auch ein Industrieroboter zu verstehen.

Produktions- und Werkzeugmaschinen sind an sich bekannt. Als Werkzeugmaschine werden bekanntlich alle Maschinen bezeichnet, die u.a. im Maschinenbau und im Werkzeugbau zur Bearbeitung von Werkstücken mit Werkzeugen dienen. Zu den Werkzeugmaschinen gehören damit speziell auch sogenannte NC- oder CNC-Maschinen. Ein Beispiel für eine Produktionsmaschine ist eine Druckmaschine. Ein Industrieroboter ist bekanntlich eine programmierbare universelle Maschine, die zur Bearbeitung und Handhabung von Werkstücken sowie für Montagezwecke bestimmt und eingerichtet ist.

Bei Maschinen der eingangs genannten Art ist eine Einflussmöglichkeit für das Bedienpersonal, zum Beispiel zum Parametrieren oder Konfigurieren der Maschine, üblich. Dabei notwendige Anzeigen, zum Beispiel in Form von Ausgaben mittels einer Anzeigeeinrichtung in Form von oder nach Art eines Bildschirms, oder Eingaben, zum Beispiel mittels einer Tastatur oder dergleichen, erfolgen mittels eines Bedien- und Beobachtungssystems. Ein solches Bedien- und Beobachtungssystem kann als eigenständiges, aber der Produktions- oder Werkzeugmaschine zugeordnetes Gerät oder als von der Produktions- oder Werkzeugmaschine umfasste Funktionalität realisiert sein. Wenn im Folgenden von einem Bedien- und Beobachtungssystem die Rede ist, sind stets beide möglichen Ausführungsformen mitzulesen.

Mittels des Bedien- und Beobachtungssystems erfolgt beim Betrieb der Produktions- oder Werkzeugmaschine zum Beispiel eine Anzeige von Systemzuständen (Positionsinformationen, Zustands- oder Fehlermeldungen, usw.). Dafür verwendete Dialogmasken werden bisher für jeden Anwendungsfall spezifisch programmiert und sind fest oder nachladbar in eine sogenannte Laufzeitumgebung der Produktions- oder Werkzeugmaschine integriert.

Eine solche Lösung ist in der US 2010/0030348 A1 beschrieben. Dort ist als Bestandteil einer Laufzeitumgebung der Maschine eine Überwachungstask (process monitoring software module) vorgesehen, die offenbar entsprechend der Taskspezifikationen zyklisch aufgerufen wird und Zugriff zum Beispiel auf die Sensorik der Maschine hat, so dass eine Überwachung von Position und Geschwindigkeiten der Maschine möglich ist. Die jeweilige Art der Überwachung scheint durch einen Benutzer vorgebbar zu sein und zum Ausführen einer insofern vom Benutzer in einem C-Code definierten Überwachungsroutine ist ein Interpreter vorgesehen. Auf diese Weise können vom Hersteller der Maschine vorgesehene Ausgaben von Alarm- oder Warnmeldungen an die Wünsche eines Anwenders angepasst werden, um zum Beispiel ein früheres Ansprechen einer Lastüberwachung oder dergleichen zu implementieren.

Bei der US 2014/0121789 A1 sollen Daten einer Steuerungseinrichtung mittels einer Verknüpfung ("mapping") mit Visualisierungsobjekten für eine Visualisierung verfügbar gemacht werden. In der US 2004/0205185 A wird ein Webbrowser als Mittel zur Anzeige von HMI-Ausgaben erörtert. Innerhalb einer Webseite für eine Anzeige spezifizierte Daten werden dabei auf Basis der jeweiligen Steuerungsdaten mittels Skript-Anweisungen direkt in die Spezifikation der Webseite geschrieben.

Eine Aufgabe der vorliegenden Erfindung besteht darin, eine Maschine der eingangs genannten Art sowie ein Verfahren zu deren Betrieb anzugeben, die bzw. das eine größere Flexibili tät bei der Spezifikation und/oder Abarbeitung von Dialogmasken oder dergleichen erlaubt.

Diese Aufgabe wird erfindungsgemäß mit einer Produktions-oder Werkzeugmaschine mit den Merkmalen des unabhängigen Vorrichtungsanspruchs sowie hinsichtlich des Verfahrens mit den Merkmalen des parallelen Verfahrensanspruchs gelöst.

Die Produktions- oder Werkzeugmaschine weist in an sich bekannter Art und Weise einen Prozessor sowie einen Speicher auf. In den Speicher ist ein mittels des Prozessors ausführbares und beim Betrieb der Maschine ausgeführtes Bearbeitungsprogramm geladen. Das Bearbeitungsprogramm umfasst auch Anweisungen für ein von der Produktions- oder Werkzeugmaschine umfasstes oder dieser zugeordnetes Bedien- und Beobachtungssystem. Eine solches Bedien- und Beobachtungssystem wird oftmals auch als HMI-System bezeichnet und entsprechend werden die sich darauf beziehenden Anweisungen des Bearbeitungsprogramms im Folgenden kurz als HMI-Anweisungen bezeichnet. Die HMI-Anweisungen sind während der Ausführung des Bearbeitungsprogramms mittels einer Verarbeitungskomponente auswertbar. Die Verarbeitung erfolgt dabei derart, dass mittels der Verarbeitungskomponente eine Anzeigeeinheit des Bedien- und Beobachtungssystems, also zum Beispiel ein Bildschirm oder dergleichen, zur Darstellung von HMI-Ausgaben ansteuerbar ist und beim Betrieb der Maschine angesteuert wird.

Ein Vorteil des hier vorgeschlagenen Ansatzes besteht darin, dass das Bearbeitungsprogramm die HMI-Anweisungen umfasst, so dass die Darstellung einer HMI-Ausgabe direkt vom Zustand des Bearbeitungsprogramms und/oder von mittels des Bearbeitungsprogramms verwalteten Zuständen der Produktions- oder Werkzeugmaschine abhängen kann. Dies erlaubt die weiter oben erwähnte größere Flexibilität bei der Spezifikation oder Abarbeitung von HMI-Ausgaben. Neben der Einbettung der HMI-Anweisungen in das Bearbeitungsprogramm basiert dies auf der Verarbeitungskomponente. Die Verarbeitungskomponente ist eine Softwarefunktionalität, die dafür bestimmt und eingerichtet ist, die HMI-Anweisungen nach Art eines Interpreters auszuwerten. Als Ergebnis einer solchen Auswertung kann sich die Notwendigkeit zur Darstellung oder Veränderung eines HMI-Elements auf der Anzeigeeinheit ergeben. Ein HMI-Element erlaubt zum Beispiel die Darstellung eines Messwerts, einer Positionsinformation, einer Benutzereingabe und so weiter oder eine Darstellung einer graphischen Repräsentation eines Maschinenteils, Letzteres gegebenenfalls zusammen mit einem Messwert, einer Positionsinformation, einer Benutzereingabe usw. Einem HMI-Element liegt demgemäß eine gegebenenfalls parametrierbare Vorlage zugrunde, so dass zur Darstellung zum Beispiel mehrerer Messwerte ein und dieselbe Vorlage verwendet werden kann. Ein jeweils zu verwendendes HMI-Element wird in den HMI-Anweisungen eindeutig referenziert, zum Beispiel über einen entsprechenden Bezeichner. Der Ausdruck HMI-Element bezeichnet also im Folgenden je nach inhaltlichem Zusammenhang entweder einen innerhalb der HMI-Anweisungen verwendeten Bezeichner, die resultierende Anzeige auf der Anzeigeeinheit oder die zugrunde liegende Vorlage.

Mittels der Verarbeitungskomponente gelingt eine sinnvolle Auftrennung bei der Abarbeitung der von dem Bearbeitungsprogramm umfassten HMI-Anweisungen. Die HMI-Anweisungen werden so ausgewertet, dass dort mittels der jeweils verwendeten Bezeichner referenzierte HMI-Elemente identifizierbar sind. Die zur Anzeige eines jeweiligen HMI-Elements notwendigen Programmcodeanweisungen brauchen nicht Teil des Bearbeitungsprogramms sein und brauchen vor allem nicht interpretativ abgearbeitet werden. Stattdessen erfolgt mittels der Verarbeitungskomponente bei einer Identifikation eines in den HMI-Anweisungen referenzierten HMI-Elements ein Aufruf von in einer Bibliothek oder dergleichen zusammengefassten Programmcodeanweisungen zur geeigneten Darstellung des jeweiligen HMI-Elements.

Darüber hinaus umfasst die Verarbeitungskomponente eine Sprachelementezerlegeeinheit sowie eine HMI-Elemente-Verwaltungseinheit, wobei mittels der Sprachelementezerlegeeinheit anhand der HMI-Anweisungen dort referenzierte HMI-Elemente identifizierbar sind und mittels der HMI-Elemente-Verwaltungseinheit für jedes identifizierte HMI-Element eine HMI-Ausgabe generierbar ist.

Die Sprachelementezerlegeeinheit führt eine syntaktische und/oder semantische Analyse der HMI-Anweisungen oder jeweils einer HMI-Anweisung durch. Die Sprachelementezerlegeeinheit fungiert dabei wie ein sogenannter Parser und wird im Folgenden daher mitunter auch nur kurz als Parser bezeichnet. Das Ergebnis der Verarbeitung einer HMI-Anweisung mittels eines solchen Parsers kann ein in der HMI-Anweisung verwendeter Bezeichner, also die Referenzierung eines HMI-Elements, sein. Anhand des jeweils identifizierten Bezeichners kann die HMI-Elemente-Verwaltungseinheit aufgerufen werden, die gewissermaßen als Zugangsfunktion für eine HMI-Elemente-Bibliothek fungiert. Diese Bibliothek umfasst geeignete Programmcodeanweisungen zur Darstellung einer Mehrzahl von HMI-Elementen und erlaubt jeweils den Aufruf eines HMI-Elements zu dessen Darstellung (HMI-Ausgabe) auf der jeweiligen Anzeigeeinheit.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform der Produktions- oder Werkzeugmaschine oder des Verfahrens zu deren Betrieb fungiert die Verarbeitungskomponente als Mittel zum Auswerten einer für die HMI-Anweisungen festgelegten Syntax und/oder Semantik. Dabei kommt zum Beispiel in Betracht, dass die HMI-Anweisungen in einem XML-Format oder dergleichen in das Bearbeitungsprogramm eingebettet sind. Ein XML-Format ist bekanntlich vergleichsweise einfach automatisch auswertbar und trotz der einfachen automatischen Auswertbarkeit noch sehr gut für einen Programmierer oder sonstiges Bedienpersonal lesbar, so dass HMI-Anweisungen in einem solchen Format leicht erstellt und ebenso leicht modifiziert und/oder gewartet werden können.

Bei einer weiteren Ausführungsform der Produktions- oder Werkzeugmaschine oder des Verfahrens zu deren Betrieb werden aufgrund der vom Bearbeitungsprogramm umfassten HMI-Anweisungen automatisch weitere HMI-Anweisungen erzeugt. Diese weiteren HMI-Anweisungen können sich noch individueller auf den Zustand des Bearbeitungsprogramms und/oder auf mittels des Bearbeitungsprogramms verwaltete Zustände der Produktions- oder Werkzeugmaschine beziehen.

Die Erfindung ist in Software implementiert und betrifft damit neben der Produktions- oder Werkzeugmaschine als Vorrichtung sowie einem korrespondierenden Verfahren zu deren Betrieb auch ein Computerprogramm mit durch einen Computer ausführbaren Programmcodeanweisungen sowie ein Speichermedium mit einem derartigen Computerprogramm, also ein Computerprogrammprodukt mit Programmcodemitteln, und schließlich auch eine Produktions- oder Werkzeugmaschine, in deren Speicher als Mittel zur Ausführung des Verfahrens ein solches Computerprogramm geladen oder ladbar ist.

Nachfolgend wird ein Ausführungsbeispiel der Erfindung anhand der Zeichnung näher erläutert. Es zeigen:
- FIG 1: eine Produktions- oder Bearbeitungsmaschine mit einem Speicher, in den ein Bearbeitungsprogramm geladen ist, welches HMI-Anweisungen umfasst, die mittels einer Verarbeitungskomponente ausgewertet und bearbeitet werden und
- FIG 2: eine Darstellung entsprechend FIG 1 mit einer zusätzlichen Funktionalität im Bereich der Verarbeitungskomponente.

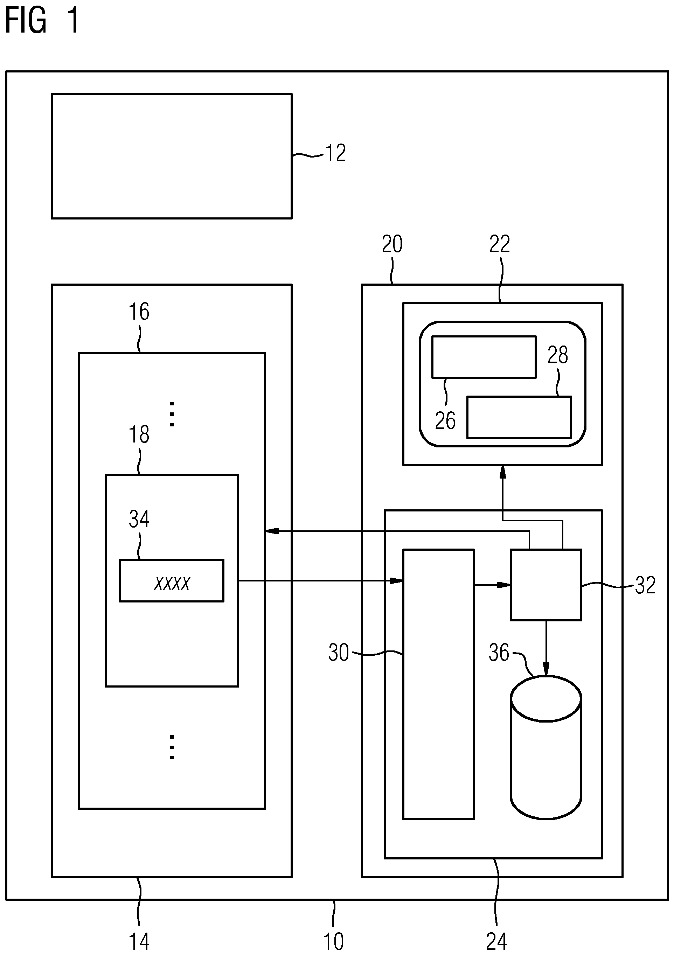

Die Darstellung in FIG 1 zeigt in schematisch vereinfachter Form und ohne spezifische Details eine im Folgenden kurz als Maschine 10 bezeichnete Produktions- oder Bearbeitungsmaschine 10. Diese umfasst in an sich bekannter Art und Weise eine Verarbeitungseinheit in Form von oder nach Art eines Prozessors 12 sowie einen Speicher 14. In den Speicher 14 ist ein Bearbeitungsprogramm 16 geladen, das mittels des Prozessors 12 ausführbar ist und die jeweils konkrete Funktionalität der Maschine 10 bestimmt. Das Bearbeitungsprogramm 16 umfasst HMI-Anweisungen 18 und diese sind mittelbar oder unmittelbar zur Ansteuerung eines Bedien- und Beobachtungssystems 20 vorgesehen, das entweder als eigenständiges Gerät der Maschine 10 zugeordnet und mit dieser in grundsätzlich an sich bekannter Art und Weise kommunikativ verbunden ist oder in die Maschine 10 integriert ist.

Das Bedien- und Beobachtungssystem 20 umfasst eine Anzeigeeinheit 22, also zum Beispiel einen Bildschirm oder dergleichen, sowie eine Verarbeitungskomponente 24. Bei der Verarbeitungskomponente 24 handelt es sich um eine in Form eines gegebenenfalls verteilten Computerprogramms implementierte Softwarefunktionalität, so dass diese auch zusammen mit dem Bearbeitungsprogramm 16 in den Speicher 14 oder in einen nicht separat dargestellten Speicher des Bedien- und Beobachtungssystems 20 geladen sein kann. Weil die Verarbeitungskomponente 24 zumindest funktional dem Bedien- und Beobachtungssystem 20 zugeordnet ist, ist diese in der Darstellung in FIG 1 als Teil des Bedien- und Beobachtungssystems 20 gezeigt.

Mittels der Verarbeitungskomponente 24 ist die Anzeigeeinheit 22 zur Erzeugung von HMI-Ausgaben, nämlich zur Darstellung von HMI-Elementen 26, 28 ansteuerbar. Bei einem HMI-Element 26, 28 handelt es sich zum Beispiel um eine Darstellung einer Positionsinformation der jeweiligen Maschine 10, um eine Darstellung eines Eingabefelds, zum Beispiel zum Parametrieren oder Konfigurieren der Maschine 10, um eine graphische Anzeige der Maschine 10 selbst oder eines Maschinenelementes, gegebenenfalls ergänzt um eine Zustandsinformation und/oder ein Eingabefeld, usw.

Die Verarbeitungskomponente 24 fungiert als Mittel zum Auswerten einer für die HMI-Anweisungen 18 festgelegten Syntax und/oder Semantik, wobei zum Beispiel in Betracht kommt, dass die HMI-Anweisungen 18 in einem XML-Format oder dergleichen von dem Bearbeitungsprogramm 16 umfasst sind.

Bei der gezeigten Ausführungsform umfasst die Verarbeitungskomponente 24 eine Sprachelementezerlegeeinheit 30 sowie eine im Folgenden auch kurz nur als Verwaltungseinheit 32 bezeichnete HMI-Elemente-Verwaltungs¬einheit 32. Die Sprachelementezerlegeeinheit 30 stellt eine Funktion zur Verfügung, wie sie von einem sogenannten Parser an sich bekannt ist, und wird entsprechend im Folgenden kurz als Parser 30 bezeichnet. Mittels des Parsers 30 werden die HMI-Anweisungen 18 ausgewertet. Dabei werden zum Beispiel sukzessive einzelne von den HMI-Anweisungen 18 umfasste Bezeichner 34 identifiziert.

Bei der Darstellung in FIG 1 ist nur ein Bezeichner 34 gezeigt und auch dieser nur in symbolisch vereinfachter Form. Die Zeichenfolge "xxxx" soll dabei für jede innerhalb der HMI-Anweisungen 18 verwendbare sinnvolle Zeichenfolge, zum Beispiel die Zeichenfolge "Eingabefeld", stehen, die in Form eines eindeutigen Bezeichners 34 ein entsprechendes HMI-Element 26, 28 referenziert. Im Falle eines Bezeichners 34 "Eingabefeld" wird also ein HMI-Element 26, 28 zur graphischen Darstellung eines solchen Eingabefelds referenziert.

Wenn der Parser 30 durch eine entsprechend der bei der Formulierung der HMI-Anweisungen 18 jeweils verwendeten Syntax und/oder Semantik erfolgende Separation einen von den HMI-Anweisungen 18 umfassten Bezeichner 34 separiert und auf diese Weise ein jeweils referenziertes HMI-Element 26, 28 identifiziert hat, ist mittels der Verwaltungseinheit 32 auf der Anzeigeeinheit 22 eine HMI-Ausgabe jedes identifizierten HMI-Elements 26, 28 generierbar. Dabei fungiert die Verwaltungseinheit 32 gewissermaßen als Schnittstelle oder Zugang zu einer Bibliothek 36 mit HMI-Funktionen. Wenn der Verwaltungseinheit 32 ein jeweils identifizierter Bezeichner 34 übermittelt wird, erfolgt anhand des Bezeichners in der Bibliothek 36 eine Auswahl einer zugehörigen HMI-Funktion sowie ein anschließender Aufruf der jeweiligen HMI-Funktion, so dass eine entsprechende HMI-Anzeige auf der Anzeigeeinheit 22 resultiert. Die Verwaltungseinheit 32 ist dabei auch für eine Abwicklung, Auswertung und/oder Aufbereitung von Benutzereingaben oder sonstigen Bedienhandlungen des Benutzers in Bezug auf ein HMI-Element 26, 28 zuständig und gibt dabei zum Beispiel einen von einem Benutzer bei einer Parametrierung eingegebenen Zahlenwert an das Bearbeitungsprogramm 16 zurück.

Dadurch, dass die HMI-Anweisungen 18 in Form von Skriptanteilen oder dergleichen in das Bearbeitungsprogramm 16 eingebettet sind, kann die Art oder der Inhalt von HMI-Ausgaben von den von dem Bearbeitungsprogramm 16 umfassten HMI-Anweisungen 18 abhängen. Die Interpretation der HMI-Anweisungen 18 wird durch zuvor vereinbarte oder durch im Bearbeitungsprogramm 16 definierte Verarbeitungsregeln festgelegt. Die Verarbeitung der HMI-Anweisungen 18 und/oder der Verarbeitungsregeln erfolgt mittels einer Verarbeitungskomponente 24, die in die Laufzeitumgebung der jeweiligen Maschine 10 oder die Laufzeitumgebung eines von der Maschine 10 umfassten oder der Maschine 10 zugeordneten Bedien- und Beobachtungssystems 20 integriert ist. Bei der gezeigten Ausführungsform erfolgt die Verarbeitung durch den Parser 30 sowie die Verwaltungseinheit 32. Der Parser 30 führt die Interpretation der HMI-Anweisungen 18 aus und leitet die aufbereiteten Anweisungen, hier also zum Beispiel identifizierte Bezeichner 34, an die Verwaltungseinheit 32 weiter. Diese ist für die Erzeugung der graphischen und/oder interaktiven Steuerelemente zuständig, also für die Erzeugung der jeweiligen HMI-Ausgabe. Parser 30 und Verwaltungseinheit 32 können auch eine Einheit bilden.

Der Verarbeitungskomponente 24 kann das jeweilige Bearbeitungsprogramm 16 durch einen Bediener zugewiesen werden. Die Verarbeitungskomponente 24 kann auch aus dem jeweiligen Bearbeitungsprogramm 16 durch das Ausführen einer zu einer HMI-Ausgabe führenden Anweisung aktiviert werden.

Die Verarbeitungskomponente 24, insbesondere deren Parser 30, kann dabei zum Beispiel auch sogenannte XML-Schema-Definitionen verarbeiten und auswerten. Mittels eines XML-Schemas kann zum Beispiel ein aus mehreren HMI-Elementen 26, 28 zusammengesetztes HMI-Element 26, 28 definiert werden, wobei die konkrete Form der Zusammensetzung vom Zustand des Bearbeitungsprogramms 16 und/oder vom Zustand der Maschine 10 abhängen kann. Die Verarbeitungskomponente 24, insbesondere deren Parser 30, kann zusätzlich oder alternativ auch bedingte Anweisungen und/oder Verzweigungen verarbeiten und auswerten, so dass vom Zustand des Bearbeitungsprogramms 16 und/oder vom Zustand der Maschine 10 abhängige HMI-Ausgaben möglich sind. Ein Beispiel dafür ist nachfolgend in einem Pseudokode einkopiert:

```
     FALLS (Bedingung) DANN
          Bezeichner1 [Parameter]
     SONST
          Bezeichner2 [Parameter]
     ENDE
```

Ein Beispiel für eine dabei mittels der Verarbeitungskomponente 24, insbesondere deren Parser 30, ausgewertete Bedingung ist eine Bedingung, die sich auf eine im Bearbeitungsprogramm 16 verwendete Variable bezieht, wobei die Variable zum Beispiel einen Zustand des Bearbeitungsprogramms 16 oder der Maschine 10 darstellt, also zum Beispiel eine Bedingung wie:
"FALLS (Automatik = EIN) DANN"

In Abhängigkeit von der jeweiligen Bedingung können dann mittels unterschiedlicher Bezeichner 34 als HMI-Ausgabe einzelne HMI-Elemente 26, 28 aufgerufen werden.

Des Weiteren können innerhalb des Bearbeitungsprogramms 16 und/oder der dortigen HMI-Anweisungen 18 auch Definition angelegt sein, die bei der Auswertung der HMI-Anweisungen mittels der Verarbeitungskomponente 24, insbesondere deren Parser 30, berücksichtigt werden, also zum Beispiel eine Definition wie:
"DEFINE Automatik = (Bedingung1) UND NICHT (Bedingung2)"

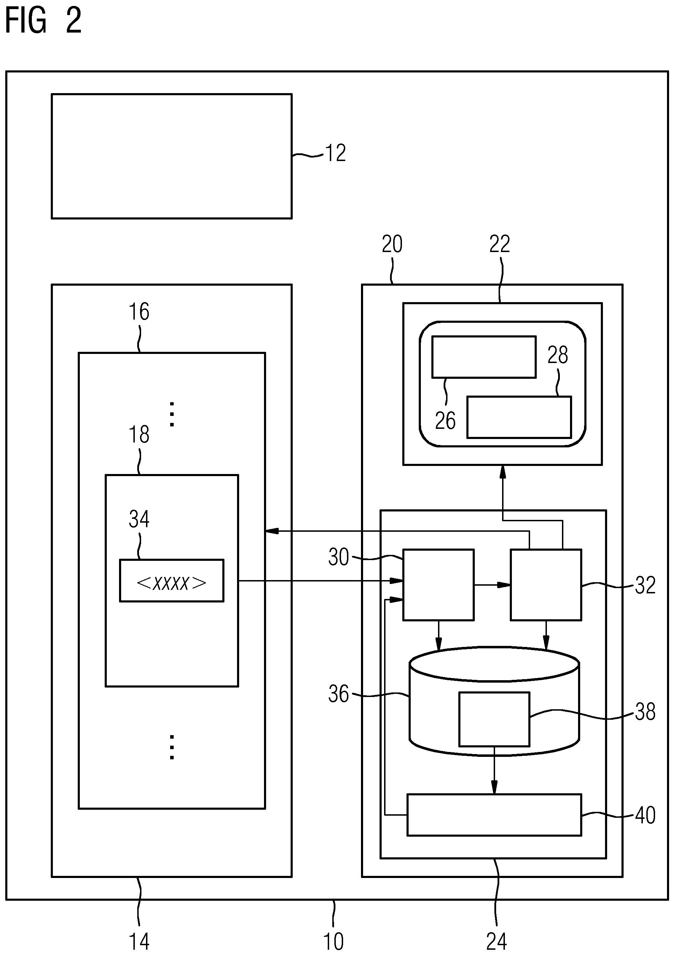

Der hier vorgestellte Ansatz erlaubt auch auf anderem Wege eine HMI-Ausgabe, die von einem Zustand des Bearbeitungsprogramms 16 und/oder von mittels des Bearbeitungsprogramms 16 verwalteten Zuständen der Maschine 10 abhängig ist. Dafür ist nachfolgend bespielhaft ein kurzes Bearbeitungsprogramm 16 einkopiert und die weitere Erläuterung bezieht sich darauf sowie auf die Darstellung in der gegenüber FIG 1 ergänzten FIG 2:

```
 ;<r_parameter_list>
 ; <!-- r parameter shown with text -->
 ;
 ; <variable index="0" text="R-Parameter index 0" />
 ; <variable index="1" text="R-Parameter index 1" />
 ; <variable index="2" text="R-Parameter index 2" />
 ; <variable index="3" text="R-Parameter index 3" />
 ; <variable index="4" text="R-Parameter index 4" />
 ; <variable index="5" text="R-Parameter index 5" />
 ;
 ;</r_parameter_list>
 F1000 G94
 G0 X0 Y0
 G91
 R[1]=20
 R[2]=30
 R[3]=40
 R[4]=20
 Y= R[1] X100
 M2
```

Der von den Bezeichnern 34 "<r_parameter_list>" und "</r_parameter_list>" eingefasste Text stellt die in das Bearbeitungsprogramm 16 eingebetteten HMI-Anweisungen 18 dar und die Bezeichner 34 fassen die HMI-Anweisungen 18 blockartig zusammen, definieren also den Beginn und das Ende der HMI-Anweisungen 18. Bei einer Identifikation durch den Parser 30 wird aufgrund des Bezeichners 34 <r_parameter_list> eine Softwarefunktion 38 aufgerufen, die zum Beispiel ebenfalls in Form eines XML-Codes definiert und in der Bibliothek 36 gespeichert ist. Die konkrete Funktion ist dabei frei definierbar. Beim vorliegenden Beispiel sollen sogenannte R-Parameter, also Rechenparameter des Bearbeitungsprogramms 16, aus diesem extrahiert werden.

Beim gezeigten Beispiel wird den Rechenparametern mittels der Anweisungen "R[1]=20", "R[2]=30", "R[3]=40" und "R[4]=20" jeweils ein Wert zugewiesen. Zur Identifikation dieser Anweisungen und zum Extrahieren der relevanten Informationen fungiert die aufgerufene Softwarefunktion 38 dafür zumindest zum Teil selbst als Parser oder ruft einen Parser 30 auf. Die HMI-Anweisung 18 "<variable index="1" text="R-Parameter index 1" />" innerhalb des durch "<r_parameter_list>" und "</r_parameter_list>" definierten Blocks konkretisiert den jeweils zu extrahierenden Rechenparameter näher (index="1") und umfasst Vorgaben für die HMI-Ausgabe (text="R-Parameter index 0"). Weil bei dem hier beschriebenen Beispiel der Aufruf der Softwarefunktion anhand des Bezeichners "<r_parameter_list>" erfolgt ist, ist bei der weiteren Spezifikation des jeweils konkret zu extrahierenden Rechenparameters eine reduzierte Information (index="1") ausreichend. Dies ist aber spezifisch für die Extraktion von Rechenparametern des Bearbeitungsprogramms 16 und bei einer Extraktion anderer Daten aus dem Bearbeitungsprogramm 16 kann eine andersartige Spezifikation erforderlich sein.

Die Verarbeitung des Bearbeitungsprogramms 16 durch die aufgerufene Softwarefunktion 38 erfolgt zum Beispiel mittels eines sogenannten SAX-Parsers. Ein solcher Parser verarbeitet bekanntlich eine Datei, hier das Bearbeitungsprogramm 16, zeilenweise und gibt jeweils einzelne Ergebnisse, darunter auch in der jeweiligen Zeile enthaltene Bezeichner 34 und dergleichen, zurück. Auf diese Weise kann durch entsprechende Programmierung der Softwarefunktion 38 mittels dieser automatisch nach bestimmten Bezeichnern 34 gesucht werden, hier also Bezeichnern 34, die einen Rechenparameter identifizieren. Wenn ein gesuchter Bezeichner 34 identifiziert wurde, generiert die Softwarefunktion ein HMI-Element 26, 28, genauer den Code für ein HMI-Element 26, 28 oder den Code zum Aufruf eines HMI-Elements 26, 28.

Im gewählten Beispiel bewirkt das resultierende HMI-Element 26, 28 eine Anzeige des Momentanwerts des jeweiligen Rechenparameters zusammen mit einem grundsätzlich frei wählbaren erläuternden Text (text="R-Parameter index 1"). Die resultierende, mittels der Softwarefunktion 38 bei der automatischen Auswertung des Bearbeitungsprogramms 16 generierte HMI-Anweisung lautet also zum Beispiel:
<control name = "EditR1" xpos = 8 ypos = 10 refvar = "[Referenz auf Variablenliste[1]]"/>
<control name = "TextR1" xpos = 20 ypos = 10 refvar = "[Referenz auf Textliste[1]]"/>.

Dabei sind "EditR1" und "TextR1" Namen, "8" und "10" bzw. "20" und "10" die Positionen der HMI-Ausgabe und mittels "refvar" werden in einer indirekt, also in Form einer Referenz übergebenen Variablen- bzw. Textliste hier der Wert des ersten Rechenparameters (R[1]) sowie der im Rahmen der vom Bearbeitungsprogramms 16 umfassten HMI-Anweisungen 18 zugeordnete Text ("R-Parameter index 1") ausgelesen und für die HMI-Ausgabe verwendet.

Wenn die Softwarefunktion 38 Code für ein HMI-Element 26, 28 generiert, entstehen gewissermaßen neben den vom Bearbeitungsprogramm 16 umfassten HMI-Anweisungen 18 weitere HMI-Anweisungen 40, nämlich zum Beispiel im Speicher des Bedien-und Beobachtungssystems 20 oder der Verarbeitungskomponente 24, die bei der Abarbeitung des Bearbeitungsprogramms 16 im Zuge der Verarbeitung der von dem Bearbeitungsprogramm 16 umfassten HMI-Anweisungen 18 ausgeführt werden. Diese können unmittelbar ausführbar sein oder eine in der Bibliothek 36 vorgehaltene HMI-Funktion referenzieren. Auf diese Weise entsteht quasi neben den vom Bearbeitungsprogramm 16 umfassten HMI-Anweisungen 18 eine zusätzliche Ebene mit weiteren HMI-Anweisungen 40. Diese können schließlich wieder genau wie die von dem Bearbeitungsprogramm 16 umfassten HMI-Anweisungen 18 ausgewertet werden, indem mittels des Parsers 30 oder eines separaten Parsers die weiteren HMI-Anweisungen 40 ausgewertet und dort referenzierte HMI-Elemente 26, 28 identifiziert werden und mittels der HMI-Elemente-Verwaltungseinheit 32 oder einer separaten Verwaltungseinheit für jedes identifizierte HMI-Element 26, 28 eine HMI-Ausgabe generiert wird.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Der hier beschriebene Ansatz vereinfacht das Erzeugen von generischen Dialogmasken durch den Anwender. Die Beschreibung einer jeweiligen Dialogmaske und der davon umfassten HMI-Elemente 26, 28 wird im jeweiligen Bearbeitungsprogramm 16 gehalten, so dass es zum Beispiel möglich ist, Masken zur Eingabe von Prozessparametern programmspezifisch anzubieten.

Einzelne im Vordergrund stehende Aspekte der hier eingereichten Beschreibung lassen sich damit kurz wie folgt zusammenfassen: Mit dem hier vorgestellten Ansatz werden eine Produktions- oder Werkzeugmaschine 10, in deren Speicher 14 ein Bearbeitungsprogramm 16 geladen ist, das HMI-Anweisungen 18 in Form von Skriptanteilen umfasst, sowie ein korrespondierendes Verfahren und ein Computerprogramm 24 zur Ausführung des Verfahrens angegeben, wobei die HMI-Anweisungen 18 während einer Ausführung des Bearbeitungsprogramms 16 mittels einer Verarbeitungskomponente 24 auswertbar sind und wobei mittels der Verarbeitungskomponente 24 eine Anzeigeeinheit 22 zur Darstellung von HMI-Ausgaben 26, 28 ansteuerbar ist.

## Patentansprüche

1. Produktions- oder Werkzeugmaschine (10) mit einem Prozessor (12) und einem Speicher (14),
wobei in den Speicher (14) ein mittels des Prozessors (12) ausführbares Bearbeitungsprogramm (16) geladen ist,
wobei während einer Ausführung des Bearbeitungsprogramms (16) mittels einer Verarbeitungskomponente (24) HMI-Anweisungen (18) auswertbar sind,
wobei mittels der Verarbeitungskomponente (24) eine Anzeigeeinheit (22) zur Darstellung von HMI-Ausgaben (26, 28) ansteuerbar ist, da
durch gekennzeichnet,
dass das Bearbeitungsprogramm (16) die HMI-Anweisungen (18) umfasst,
dass die Verarbeitungskomponente (24) eine Sprachelementezerlegeeinheit (30) sowie eine HMI-Elemente-Verwaltungseinheit (32) umfasst,
dass mittels der Sprachelementezerlegeeinheit (30) anhand der HMI-Anweisungen (18) dort referenzierte HMI-Elemente (26, 28) identifizierbar sind und
dass mittels der HMI-Elemente-Verwaltungseinheit (32) für jedes identifizierte HMI-Element (26, 28) eine HMI-Ausgabe generierbar ist.

2. Produktions- oder Werkzeugmaschine (10) nach Anspruch 1,
wobei die Verarbeitungskomponente (24) als Mittel zum Auswerten einer für die HMI-Anweisungen (18) festgelegten Syntax und/oder Semantik fungiert.

3. Verfahren zum Betrieb einer Produktions- oder Werkzeugmaschine (10) nach einem der Ansprüche 1 oder 2,
wobei die Maschine (10) im Betrieb das HMI-Anweisungen (18) umfassende Bearbeitungsprogramm (16) ausführt,
wobei die HMI-Anweisungen (18) während einer Ausführung des Bearbeitungsprogramms (16) mittels einer Verarbeitungskomponente (24) ausgewertet werden,
wobei die Verarbeitungskomponente (24) eine Sprachelementezerlegeeinheit (30) sowie eine HMI-Elemente-Verwaltungseinheit (32) umfasst,
wobei mittels der Sprachelementezerlegeeinheit (30) die HMI-Anweisungen (18) ausgewertet und dort referenzierte HMI-Elemente (26, 28) identifiziert werden,
wobei mittels HMI-Elemente-Verwaltungseinheit (32) für jedes identifizierte HMI-Element (26, 28) eine HMI-Ausgabe generiert wird und
wobei mittels der Verarbeitungskomponente (24) eine Anzeigeeinheit (22) zur Darstellung von HMI-Elementen (26, 28) angesteuert wird.

4. Betriebsverfahren nach Anspruch 3, wobei die Verarbeitungskomponente (24) eine Sprachelementezerlegeeinheit (30) sowie eine HMI-Elemente-Verwaltungseinheit (32) umfasst,
wobei mittels der Sprachelementezerlegeeinheit (30) die HMI-Anweisungen (18) zur Identifikation dort referenzierter Softwarefunktionen (38) ausgewertet werden,
wobei eine identifizierte Softwarefunktion (38) ausgeführt wird und bei der Ausführung weitere HMI-Anweisungen (40) generiert,
wobei mittels der Sprachelementezerlegeeinheit (30) die weiteren HMI-Anweisungen (40) ausgewertet und dort referenzierte HMI-Elemente (26, 28) identifiziert werden und
wobei mittels HMI-Elemente-Verwaltungseinheit (32) für jedes identifizierte HMI-Element (26, 28) eine HMI-Ausgabe generiert wird.

5. Computerprogramm (24) mit Programmcodemitteln, um alle Schritte von jedem beliebigen der Ansprüche 3 oder 4 durchzuführen, wenn das Computerprogramm (24) auf einer Produktions-und/oder Werkzeugmaschine (10) ausgeführt wird.

6. Computerprogrammprodukt mit auf einem computerlesbaren Datenträger gespeicherten Programmcodemitteln zur Ausführung des Verfahrens nach Anspruch 3 oder 4, wenn das Computerprogrammprodukt auf einer Produktions- und/oder Werkzeugmaschine (10) ausgeführt wird.

7. Produktions- und/oder Werkzeugmaschine (10) nach einem der Ansprüche 1 oder 2, wobei in den Speicher (14) als Computerprogramm (24) gemäß Anspruch 5 eine Verarbeitungskomponente (24) geladen ist, die beim Betrieb der Maschine (10) durch deren Prozessor (12) ausgeführt wird.

## Claims

1. Production machine or machine tool (10) having a processor (12) and a memory (14),
wherein a processing work program (16) which can be executed by means of the processor (12) is loaded in the memory (14),
wherein HMI instructions (18) can be evaluated by means of a processing component (24) during execution of the processing work program (16),
wherein a display unit (22) can be actuated by means of the processing component (24) for the purpose of showing HMI outputs (26, 28),
**characterised in that**,
the processing work program (16) incorporates the HMI instructions (18),
the processing component (24) includes a language element evaluation unit (30) together with an HMI element administration unit (32),
by means of the language element evaluation unit (30), HMI elements (26, 28) which are referenced in the HMI instructions (18) can be identified, and
by means of the HMI element administration unit (32), an HMI output can be generated for each identified HMI element (26, 28).

2. Production machine or machine tool (10) according to claim 1, wherein the processing component (24) acts as a means of evaluating a syntax and/or semantics defined for the HMI instructions (18).

3. Method for operating a production machine or machine tool (10) according to one of claims 1 or 2,
wherein the machine (10), when operating, executes the processing work program (16) which incorporates the HMI instructions (18),
wherein the HMI instructions (18) are evaluated, during execution of the processing work program (16), by means of a processing component (24),
wherein the processing component (24) includes a language element evaluation unit (30) together with an HMI element administration unit (32),
wherein the HMI instructions (18) are evaluated by means of the language element evaluation unit (30), and HMI elements (26, 28) referenced in them are identified,
wherein an HMI output is generated for each identified HMI element (26, 28) by means of the HMI element administration unit (32), and
wherein a display unit (22) is actuated by means of the processing component (24) for the purpose of showing HMI outputs (26, 28).

4. Method of operation according to claim 3, wherein the processing component (24) includes a language element evaluation unit (30) together with an HMI element administration unit (32),
wherein the HMI instructions (18) are evaluated by means of the language element evaluation unit (30) for the purpose of identifying software functions (38) referenced in them,
wherein an identified software function (38) is executed, and during its execution further HMI instructions (40) are generated,
wherein the further HMI instructions (40) are evaluated by means of the language element evaluation unit (30) and HMI elements (26, 28) which are referenced in them are identified, and
wherein by means of the HMI element administration unit (32) an HMI output is generated for each identified HMI element (26, 28).

5. Computer program (24), with program code capabilities for carrying out all the steps in any desired one of the claims 3 or 4 when the computer program (24) is executed on a production machine or machine tool (10).

6. Computer program product having program code capabilities, stored on a computer-readable data medium, for carrying out the method according to claim 3 or 4 when the computer program product is executed on a production machine and/or machine tool (10).

7. Production machine and/or machine tool (10) according to one of claims 1 or 2, wherein a processing component (24) is loaded into the memory (14) as a computer program (24), according to claim 5, which during the operation of the machine (10) is executed by its processor (12).

## Revendications

1. Machine de production ou machine-outil (10), comprenant un processeur (12) et une mémoire (14),
dans laquelle un programme (16) d'usinage pouvant être réalisé au moyen du processeur (12) est chargé dans la mémoire (14),
dans laquelle, pendant une exécution du programme (16) d'usinage, des instructions HMI (18) peuvent être exploitées au moyen d'une composante (24) de traitement,
dans laquelle, au moyen de la composante (24) de traitement, une unité d'affichage peut être commandée pour représenter des sorties HMI (26, 28),
**caractérisée**
**en ce que** le programme (16) d'usinage comprend les instructions HMI (18),
**en ce que** la composante (24) de traitement comprend une unité (30) de décomposition d'éléments de langage, ainsi qu'une unité (32) de gestion d'éléments HMI,
**en ce que**, au moyen de l'unité (30) de décomposition d'éléments de langage, on peut, à l'aide des instructions HMI (18), identifier des éléments HMI (26, 28), qui y sont référencés et
**en ce que**, au moyen de l'unité (32) de gestion d'éléments HMI, on peut, pour chaque élément HMI (26, 28) identifié, produire une sortie HMI.

2. Machine de production ou machine-outil (10) suivant la revendication 1, dans laquelle la composante (24) de traitement sert de moyen d'exploitation d'une syntaxe et/ou d'une sémantique définie pour les instructions HMI (18).

3. Procédé pour faire fonctionner une machine de production ou machine-outil (10) suivant l'une des revendications 1 ou 2,
dans lequel la machine (10) exécutant en fonctionnement le programme (16) d'usinage comprenant les instructions HMI (18),
dans lequel on exploite, au moyen d'une composante (24) de traitement, les instructions HMI (18) pendant une exécution du programme (16) de traitement,
dans lequel la composante (24) de traitement comprend une unité (30) de décomposition d'éléments de langage, ainsi qu'une unité (32) de gestion d'éléments HMI,
dans lequel, au moyen de l'unité (30) de décomposition d'éléments de langage, on exploite les instructions HMI (18) et on identifie des éléments HMI (26, 28), qui y sont référencés,
dans lequel, au moyen de l'unité (32) de gestion d'éléments HMI, on produit une sortie HMI pour chaque élément (26, 28) identifié et
dans lequel, au moyen de la composante (24) de traitement, on commande une unité (22) d'affichage pour représenter des éléments HMI (26, 28).

4. Procédé suivant la revendication 3, dans lequel la composante (24) de traitement comprend une unité (30) de décomposition d'éléments de langage, ainsi qu'une unité (32) de gestion d'éléments HMI,
dans lequel, au moyen de l'unité (30) de décomposition d'éléments de langage, on exploite les instructions HMI (18) pour identifier des fonctions (38) logicielles, qui y sont référencées,
dans lequel on exécute une fonction (38) logicielle identifiée et, lors de l'exécution, on produit d'autres instructions HMI (40),
dans lequel, au moyen de l'unité (30) de décomposition d'éléments de langage, on exploite les autres instructions HMI (40) et on identifie des éléments HMI (26, 28), qui y sont référencés et
dans lequel, au moyen de l'unité (32) de gestion d'éléments HMI, on produit une sortie HMI pour chaque élément HMI (26, 28) identifié.

5. Produit (24) d'ordinateur ayant des moyens de code de programme pour effectuer tous les stades de l'une quelconque des revendications 3 ou 4, lorsque le programme (24) d'ordinateur est exécuté sur une machine de production et/ou une machine-outil (10).

6. Produit de programme d'ordinateur, comprenant des moyens de code de programme mémorisés sur un support de données déchiffrables par ordinateur pour exécuter le procédé suivant la revendication 3 ou 4, lorsque le produit de programme d'ordinateur est exécuté sur une machine de production et/ou une machine-outil (10).

7. Machine de production et/ou machine-outil (10) suivant l'une des revendications 1 ou 2, dans laquelle, dans la mémoire (14), est chargé, comme programme (34) d'ordinateur suivant la revendication 5, une composante (24) de traitement, qui, lors du fonctionnement de la machine (10), est effectuée par son processeur (12).
